# EUROPÄISCHE PATENTANMELDUNG

(11) **EP 1 748 359 A1**
(43) Veröffentlichungstag der Anmeldung: **31.01.2007**
(21) Anmeldenummer: 05016363.3
(22) Anmeldetag: 28.07.2005
(51) Int. Cl.: G06F 9/445

(54) **Datenverarbeitungsanlage**

(71) Anmelder: ads-tec AUTOMATION DATEN- UND SYSTEMTECHNIK GmbH, 70711 Leinfelden-Echterdingen (DE)
(72) Erfinder: Speidel, Thomas, 71706 Markgröningen (DE)
(74) Vertreter: Wasmuth, Rolf

(57) **Zusammenfassung**

Eine Datenverarbeitungsanlage (1) besitzt eine Datenverarbeitungseinheit (3) mit einem Prozessor (34), einem nichtflüchtigen Speicher (35) für eine Startsoftware und mit einer Speichereinheit (4). Die Datenverarbeitungsanlage (1) besitzt eine übergeordnete Steuereinheit (2), die einen Prozessor (22), einen Arbeitspeicher (23) und einen nichtflüchtigen Speicher (24) für eine Startsoftware besitzt. Die übergeordnete Steuereinheit (2) besitzt eine Datenverbindung (7) zu der Datenverarbeitungseinheit (3), eine Datenverbindung (8) zu der Speichereinheit (4) und eine Schnittstelle (18) für eine Netzwerkverbindung. Die übergeordnete Steuereinheit (2) besitzt eine Schalteinrichtung (9), die in einem ersten Schaltzustand die Speichereinheit (4) mit der Datenverarbeitungseinheit (3) verbindet und in einem zweiten Schaltzustand eine Verbindung zwischen der Speichereinheit (4) und der Schnittstelle (18) für die Netzwerkverbindung herstellt. Dadurch kann die Speichereinheit (4) vollständig von einer externen Datenverarbeitungsanlage (11) beschrieben werden.

## Beschreibung

Die Erfindung betrifft eine Datenverarbeitungsanlage der im Oberbegriff des Anspruchs 1 angegebenen Gattung.

Datenverarbeitungsanlagen, die eine Datenverarbeitungseinheit besitzen, sind bekannt. Datenverarbeitungseinheiten besitzen üblicherweise einen Prozessor, einen nichtflüchtigen Speicher, auf dem die Startsoftware für die Datenverarbeitungseinheit gespeichert ist und eine Speichereinheit, auf der das Betriebssystem und Anwendungsprogramme der Datenverarbeitungseinheit sowie weitere Daten abgelegt sind. Beim Einschalten der Datenverarbeitungseinheit wird zunächst die Startsoftware (BIOS - Basic Input/Output System) ausgeführt, die auf einem nichtflüchtigen Speicher wie einem ROM (Read-Only-Memory), einem EPROM (Erasable Programmable Read-Only-Memory) oder einem Flash-Speicher gespeichert ist. Die Startsoftware führt einen Selbsttest durch und lädt das Betriebssystem in den Arbeitsspeicher. Nach dem Hochlaufen der Datenverarbeitungseinheit kontrolliert das Betriebssystem die Zugriffe auf die Speichereinheit.

Aus der EP 1 467 269 A1 ist eine Datenverarbeitungseinheit bekannt, die eine lokale Kennung besitzt. Die lokale Kennung erlaubt es, von einer zentralen Datenverarbeitungsanlage die lokal benötigten Softwaremodule der Datenverarbeitungseinheit zu laden. Das Laden der Softwaremodule erfolgt nach dem Starten der Datenverarbeitungseinheit, also wenn das Betriebssystem der Datenverarbeitungseinheit bereits aktiv ist. Ein Austauschen des Betriebssystems von der zentralen Datenverarbeitungsanlage aus ist dadurch nicht möglich.

Der Erfindung liegt die Aufgabe zugrunde, eine Datenverarbeitungsanlage der gattungsgemäßen Art zu schaffen, die es ermöglicht, den Massenspeicher einer Datenverarbeitungseinheit einschließlich des Betriebssystems mit Daten von einer zentralen Datenverarbeitungsanlage zu überschreiben.

Diese Aufgabe wird durch eine Datenverarbeitungsanlage mit den Merkmalen des Anspruchs 1 gelöst.

Um ein vollständiges Überschreiben des Massenspeichers einer Datenverarbeitungseinheit zu erlauben, ist eine übergeordnete Steuereinheit vorgesehen, die sowohl mit der Datenverarbeitungseinheit als auch mit der Speichereinheit verbunden ist. Im normalen Betrieb verbindet die übergeordnete Steuereinheit die Datenverarbeitungseinheit mit der Speichereinheit und die Datenverarbeitungseinheit arbeitet mit der Speichereinheit in üblicher Weise zusammen. Soll die Speichereinheit überschrieben werden, wird die Speichereinheit von der übergeordneten Steuereinheit betrieben. Die Datenverarbeitungseinheit ist nicht aktiv, so daß auch das Betriebssystem der Datenverarbeitungseinheit nicht in den Arbeitsspeicher geladen ist. Die Speichereinheit kann dadurch vollständig, einschließlich des Betriebssystems, überschrieben werden. Hierzu stellt die übergeordnete Steuereinheit eine Verbindung zwischen der Speichereinheit und einer externen Datenverarbeitungsanlage über eine Netzwerkschnittstelle her. Die räumliche Distanz zwischen den beiden Datenverarbeitungsanlagen ist damit für die Funktion unerheblich. Über die Netzwerkverbindung kann die externe Datenverarbeitungsanlage die Speichereinheit vollständig neu beschreiben. Nach dem Überschreiben der Speichereinheit stellt die Schalteinrichtung eine Verbindung zwischen der Datenverarbeitungseinheit und der Speichereinheit her. Beim nächsten Starten der Datenverarbeitungseinheit lädt das Startprogramm automatisch das neu aufgespielte Betriebssystem in den Arbeitsspeicher. Die Datenverarbeitungseinheit ist voll funktionsfähig, ohne daß an der Datenverarbeitungsanlage vor Ort Handlungen vorgenommen werden müssen. Die übergeordnete Steuereinheit erlaubt damit eine vollständige Neukonfiguration einer Datenverarbeitungseinheit von einer zweiten Datenverarbeitungsanlage über eine Netzwerkverbindung. Insbesondere Wartungsaufgaben oder Systemumstellungen können dadurch auf einfache Weise und ohne Fachleute vor Ort vorgenommen werden. Die Datenverarbeitungsanlage kann dabei mehrere Datenverarbeitungseinheiten besitzen, die mit der übergeordneten Steuereinheit verbunden sind.

Vorteilhaft besitzt die übergeordnete Steuereinheit eine Eingabe/Ausgabe-Schnittstelle zur Verbindung mit externen Steuergeräten. Über die Eingabe/Ausgabe-Schnittstelle kann ein Datenabruf bei der zentralen Datenverarbeitungsanlage initiiert und so eine Neubeschreibung der Speichereinheit bzw. bei mehreren Datenverarbeitungseinheiten der Speichereinheiten veranlaßt werden. Es kann jedoch auch vorgesehen sein, daß eine Neubeschreibung der Speichereinheit von der zentralen Datenverarbeitungsanlage aus veranlaßt wird. Zweckmäßig besitzt die übergeordnete Steuereinheit eine eigene Stromversorgung. Es ist vorgesehen, daß die Datenverbindung zu der Datenverarbeitungseinheit und zu der Speichereinheit über ein Bussystem realisiert ist und daß die übergeordnete Steuereinheit eine Steuereinheit für das Bussystem besitzt. Über das Bussystem läßt sich auf einfache Weise eine schnelle Verbindung zwischen den Einheiten erreichen. Dabei ist vorgesehen, daß die Schalteinrichtung im zweiten Schaltzustand eine Verbindung zwischen der Speichereinheit und der Steuereinheit für das Bussystem herstellt. Dadurch können die Daten von der zentralen Datenverarbeitungsanlage, die über die Netzwerkverbindung zur übergeordneten Steuereinheit gelangen, direkt von dem Bussystem zur Speichereinheit geleitet werden.

Es ist vorgesehen, daß die übergeordnete Steuereinheit einen austauschbaren Datenspeicher besitzt. Der austauschbare Datenspeicher ermöglicht es, eine Gerätekennung auf der übergeordneten Steuereinheit zu hinterlegen. Der Gerätekennung sind in der zentralen Datenverarbeitungsanlage die auf der Speichereinheit hinterlegten Daten zugeordnet. Bei einem Ausfall der Datenverarbeitungsanlage kann der Datenspeicher aus der übergeordneten Steuereinheit entnommen und in eine zweite Datenverarbeitungsanlage eingesteckt werden. Die auf der Speichereinheit hinterlegten Daten können dann von der übergeordneten Steuereinheit aus der zentralen Datenverarbeitungsanlage geladen werden, so daß die Speichereinheit der ausgetauschten Datenverarbeitungsanlage vollständig mit den Daten der ausgetauschten Anlage beschrieben wird. Dadurch ist auf einfache Weise der Austausch der Datenverarbeitungsanlage ermöglicht. Um auch zu weiteren Komponenten eine Netzwerkverbindung herstellen zu können, ist vorgesehen, daß die übergeordnete Steuereinheit eine Steuereinheit für einen zweiten Netzwerkanschluß besitzt. Zweckmäßig besitzt die Speichereinheit mehrere Massenspeicher und eine Massenspeichersteuereinrichtung.

Ein Ausführungsbeispiel der Erfindung wird im folgenden anhand der Zeichnung erläutert. Es zeigen:
- Fig. 1: eine schematische Darstellung der Datenverarbeitungsanlage in einem ersten Schaltzustand,
- Fig. 2: eine schematische Darstellung der Datenverarbeitungsanlage aus Fig. 1 in einem zweiten Schaltzustand,
- Fig. 3: eine schematische Darstellung der übergeordneten Steuereinheit der Datenverarbeitungsanlage aus den Fig. 1 und 2.

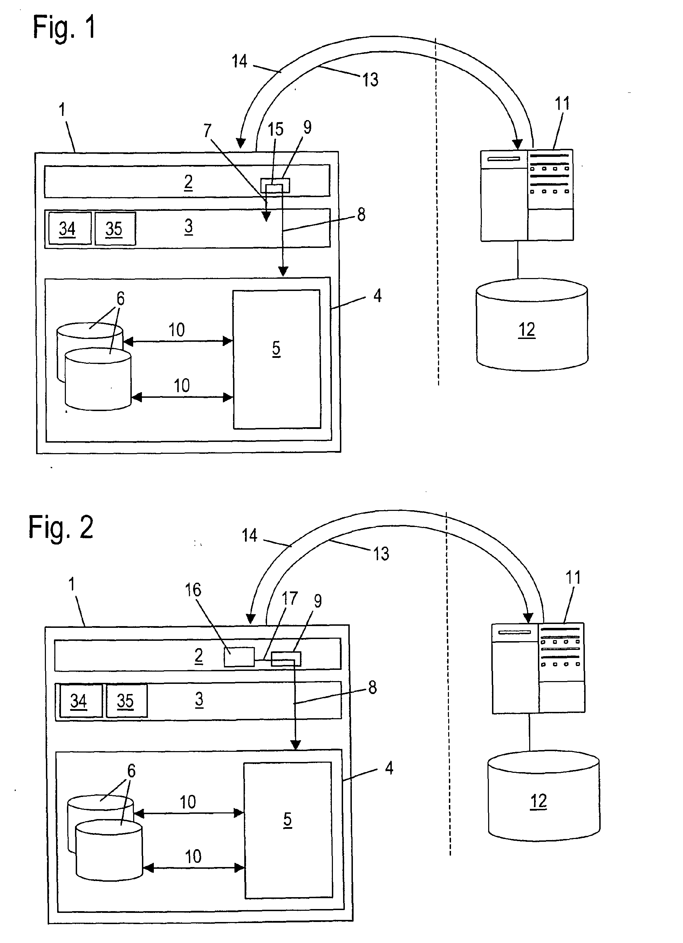

Die in Fig. 1 gezeigte Datenverarbeitungsanlage 1 besitzt eine Datenverarbeitungseinheit 3 mit einem Prozessor 34 und einem nichtflüchtigen Speicher 35. Der Prozessor 34 ist eine CPU (Central Processing Unit) und der nichtflüchtige Speicher 35 ein ROM, EPROM oder Flash-Speicher. Die Datenverarbeitungsanlage 1 besitzt eine übergeordnete Steuereinheit 2, deren Aufbau im folgenden noch näher beschrieben wird. Die übergeordnete Steuereinheit 2 ist über eine Datenverbindung 7 mit der Datenverarbeitungseinheit 3 und über eine Datenverbindung 8 mit einer Speichereinheit 4 verbunden. Die Datenverbindungen 7 und 8 sind vorzugsweise Busverbindungen, insbesondere eine PCI-Express-Verbindung (Peripheral Component Interconnect-Express-Verbindung). Es können.jedoch auch andere Bussysteme für die Verbindungen vorteilhaft sein.

Die übergeordnete Steuereinheit 2 besitzt eine Schalteinrichtung 9, die in dem mit Fig. 1 gezeigten Schaltzustand die Datenverbindungen 7 und 8 miteinander verbindet. Dadurch steht die Datenverarbeitungseinheit 3 über das Bussystem direkt mit der Speichereinheit 4 in Verbindung. Die Speichereinheit 4 besitzt mehrere Massenspeicher 6, die von einer Massenspeicher-Steuereinrichtung 5 verwaltet werden. Der Zugriff der Massenspeicher-Steuereinrichtung 5 auf die Massenspeicher 6 erfolgt über die Schnittstellen 10. Die Schnittstellen 10 zwischen der Massenspeicher-Steuereinrichtung 5 und den Massenspeichern 6 können beispielsweise als SCSI (Small Computer System Interface), EIDE-Interface (Enhanced Integrated Drive Electronics), SATA (Serial Advanced Technology Attachments) oder dgl. ausgebildet sein. Die Verwaltung kann beispielsweise nach dem RAID-System (Redundant Array of Independent Disks) erfolgen.

Die übergeordnete Steuereinheit 2 steht über die Netzwerkverbindungen 13 und 14 mit einer zentralen Datenverarbeitungsanlage 11 in Verbindung. Die Netzwerkverbindung 13 stellt eine Upstream-Verbindung von der Datenverarbeitungsanlage 1 zur übergeordneten Datenverarbeitungsanlage 11 dar, die im wesentlichen Bestätigungs- und Kontrollbefehle übermittelt. Über die Downstream-Datenverbindung 14 können auf der zentralen Datenverarbeitungsanlage 11 hinterlegte Daten zur Datenverarbeitungsanlage 1 übermittelt werden. Die zentrale Datenverarbeitungsanlage 11 besitzt einen Massenspeicher 12, auf dem Daten hinterlegt sind, mit der die Speichereinheit 4 bespielt ist oder mit denen die Speichereinheit 4 bespielt werden soll.

Die Datenverarbeitungseinheit 3 mit der Speichereinheit 4 kann beispielsweise ein handelsüblicher Computer, eine Workstation oder dgl. sein. Beim Einschalten der Datenverarbeitungseinheit 3 führt der Prozessor 34 zunächst das Startprogramm (BIOS) aus, das im nichtflüchtigen Speicher 35 hinterlegt ist. Dabei wird aus der Speichereinheit 4 das Betriebssystem der Datenverarbeitungseinheit 3 in den Arbeitsspeicher der Datenverarbeitungseinheit 3 geladen. Anschließend kontrolliert die Datenverarbeitungseinheit 3 die Zugriffe auf die Speichereinheit 4.

Bei dem in Fig. 2 gezeigten Schaltzustand der Schalteinrichtung 9 ist die Speichereinheit 4 über die Datenverbindung 8 und eine Verbindung 17 mit einer Steuereinheit 16 für ein Bussystem verbunden, die in der übergeordneten Steuereinheit 2 angeordnet ist. Die Steuereinheit 16 für das Bussystem stellt eine Verbindung zwischen der Speichereinheit 4 und der zentralen Datenverarbeitungsanlage 11 her. Die Datenverarbeitungseinheit 3 hat in diesem Schaltzustand keinen Zugriff auf die Speichereinheit 4. Dadurch kann die übergeordnete Steuereinheit 2 die Speichereinheit 4 vollständig mit Daten aus dem Massenspeicher 12 der zentralen Datenverarbeitungsanlage 11 betanken. Da die Datenverarbeitungseinheit 3 keinen Zugriff auf die Speichereinheit 4 hat, kann auch das Betriebssystem, das auf der Speichereinheit 4 gespeichert ist, vollständig überschrieben werden.

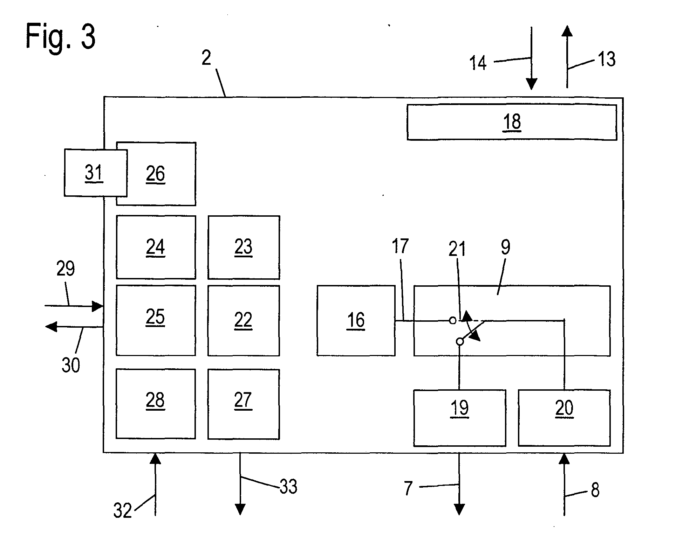

In Fig. 3 ist die übergeordnete Steuereinheit 2 detaillierter dargestellt. Wie Fig. 3 zeigt, ist die Datenverbindung 7 zur Datenverarbeitungseinheit 3 an einem Anschluß 19 angeschlossen, der vorzugsweise als PCI-Express-Output-Anschluß ausgebildet ist. Der Anschluß 20 für die Datenverbindung 8 zur Speichereinheit 4 ist vorzugsweise als PCI-Express-Input-Anschluß ausgebildet. Die Schalteinrichtung 9 besitzt einen Schalter 21, der den Anschluß 20 im ersten Schaltzustand mit dem Anschluß 19 und im zweiten Schaltzustand mit der Steuereinheit 16 verbindet. Die Steuereinheit 16 ist vorzugsweise ein interner PCI-Express-Controller. Zur Anbindung an die Netzwerkverbindungen 13 und 14 besitzt die übergeordnete Steuereinheit eine Netzwerkschnittstelle 18, die beispielsweise eine Ethernet-Schnittstelle, eine ISDN-Schnittstelle, eine DSL-Schnittstelle, eine Modem-Schnittstelle oder dgl. sein kann.

Die übergeordnete Steuereinheit 2 besitzt einen eigenen Prozessor 22, nämlich eine CPU (Central Processing Unit) und einen Arbeitsspeicher 23, insbesondere ein RAM (Random Access Memory). Die übergeordnete Speichereinheit 2 besitzt einen nichtflüchtigen Speicher 24, vorzugsweise einen Flash-Speicher (Flash-EEPROM). Es können jedoch auch andere nichtflüchtige Speicher zum Einsatz kommen. Auf dem nichtflüchtigen Speicher 24 ist das Startprogramm (BIOS) gespeichert, so daß die übergeordnete Steuereinheit 2 unabhängig von der Datenverarbeitungseinheit 3 starten kann.

Die übergeordnete Steuereinheit 2 besitzt einen Anschluß 26 für einen austauschbaren Datenspeicher 31. Der Datenspeicher 31 kann eine Smart Card, eine SIMM Card, Flash Card, ein Memorystick, ein Microdrive, eine Diskette, eine CD-ROM oder dgl. sein. Auf dem austauschbaren Datenspeicher 31 sind Kenndaten hinterlegt, die die Datenverarbeitungsanlage 1 eindeutig identifizieren. Über die auf dem Datenspeicher 31 hinterlegten Daten kann die zentrale Datenverarbeitungsanlage 11 aus dem Massenspeicher 12 die korrekten Daten für die Speichereinheit 4 zuordnen. Dadurch, daß der Datenspeicher 31 austauschbar ist, kann die gesamte Datenverarbeitungsanlage 1 auf einfache Weise ausgetauscht werden. Beispielsweise bei Fehlfunktionen kann der Datenspeicher 31 aus der Datenverarbeitungsanlage entnommen werden und eine identisch aufgebaute Datenverarbeitungsanlage mit beliebig beschriebener Speichereinheit kann statt dessen über die Netzwerkverbindungen 13 und 14 mit der zentralen Datenverarbeitungsanlage 11 verbunden werden. Der austauschbare Datenspeicher 31 wird in den Anschluß 26 der neuen Datenverarbeitungsanlage 1 eingesteckt. Dadurch kann die zentrale Datenverarbeitungsanlage 11 anhand der Kenndaten die korrekten, auf der Speichereinheit 4 zu hinterlegenden Daten an die Datenverarbeitungsanlage 1 senden. Über die übergeordnete Steuereinheit 2 kann die Speichereinheit 4 vollständig mit den Daten aus der zentralen Datenverarbeitungsanlage 11 überschrieben werden. Die Datenverarbeitungsanlage 1 ist danach voll einsatzfähig. Die Speichereinheit 4 ist mit einem vollständigen Abbild der Speichereinheit der ausgewechselten Datenverarbeitungsanlage bespielt.

Die übergeordnete Steuereinheit 2 besitzt eine Eingabe/Ausgabe-Schnittstelle 25, über die die übergeordnete Steuereinheit 2 Input-Signale entlang des Pfeils 29 empfangen und Output-Signale entlang des Pfeils 30 versenden kann. Dadurch kann über externe Steuergeräte beispielsweise ein vollständiges Überschreiben der Speichereinheit 4 initiiert werden. Die übergeordnete Steuereinheit 2 besitzt außerdem eine Steuereinheit 27 für einen Netzwerkanschluß (Ethernet Network Controller), an dem über den Netzwerkanschluß 33 weitere Datenverarbeitungseinheiten wie beispielsweise Computer oder Workstations angeschlossen werden können. Die übergeordnete Steuereinheit 2 besitzt außerdem eine eigene Stromversorgung 28, die die übergeordnete Steuereinheit 2 über den Stromanschluß 32 unabhängig von der Datenverarbeitungseinheit 3 mit Strom versorgt.

Die Datenverarbeitungsanlage 1 kann auch ein Steuer- und/oder Diagnosegerät, beispielsweise in einer Fertigung, sein.

Die Datenverarbeitungsanlage 1 kann mehrere Datenverarbeitungseinheiten 3 besitzen, die jeweils einen Prozessor 34, einen nichtflüchtigen Speicher 35 sowie eine Speichereinheit 4 aufweisen. Die übergeordnete Steuereinheit 2 ist mit jeder Datenverarbeitungseinheit 3 und mit jeder Speichereinheit 4 verbunden. Vorzugsweise besitzt die übergeordnete Steuereinheit 2 für jede Datenverarbeitungseinheit 3 eine Schalteinrichtung 9, so daß jede Speichereinheit 4 individuell mit neuen Daten von der externen Datenverarbeitungsanlage 11 versorgt werden kann. Es kann jedoch auch vorgesehen sein, mehrere oder alle Datenverarbeitungseinheiten 3 über eine gemeinsame Schalteinrichtung 9 zu steuern.

## Patentansprüche

1. Datenverarbeitungsanlage mit mindestens einer Datenverarbeitungseinheit (3), wobei die Datenverarbeitungseinheit (3) einen Prozessor (34), einen nichtflüchtigen Speicher (35) für eine Startsoftware und eine Speichereinheit (4) besitzt,
**dadurch gekennzeichnet, daß** die Datenverarbeitungsanlage (1) eine übergeordnete Steuereinheit (2) besitzt, wobei die übergeordnete Steuereinheit (2) einen Prozessor (22), einen Arbeitsspeicher (23) und einen nichtflüchtigen Speicher (24) für eine Startsoftware besitzt, wobei die übergeordnete Steuereinheit (2) eine Datenverbindung (7) zu der Datenverarbeitungseinheit (3), eine Datenverbindung (8) zu der Speichereinheit (4) und eine Schnittstelle (18) für eine Netzwerkverbindung besitzt, und wobei die übergeordnete Steuereinheit (2) eine Schalteinrichtung (9) besitzt, die in einem ersten Schaltzustand die Speichereinheit (4) mit der Datenverarbeitungseinheit (3) verbindet und in einem zweiten Schaltzustand eine Verbindung zwischen der Speichereinheit (4) und der Schnittstelle (18) für die Netzwerkverbindung herstellt.

2. Datenverarbeitungsanlage nach Anspruch 1,
**dadurch gekennzeichnet, daß** die übergeordnete Steuereinheit (2) eine Eingabe/Ausgabe-Schnittstelle (25) zur Verbindung mit externen Steuergeräten besitzt.

3. Datenverarbeitungsanlage nach Anspruch 1 oder 2,
**dadurch gekennzeichnet, daß** die übergeordnete Steuereinheit eine eigene Stromversorgung (28) besitzt.

4. Datenverarbeitungsanlage nach einem der Ansprüche 1 bis 3,
**dadurch gekennzeichnet, daß** die Datenverbindung (7) zu der Datenverarbeitungseinheit (3) und die Datenverbindung (8) zu der Speichereinheit (4) über ein Bussystem realisiert ist und daß die übergeordnete Steuereinheit (2) eine Steuereinheit (16) für das Bussystem besitzt.

5. Datenverarbeitungsanlage nach Anspruch 4,
**dadurch gekennzeichnet, daß** die Schalteinrichtung (9) im zweiten Schaltzustand eine Verbindung zwischen der Speichereinheit (4) und der Steuereinheit (16) für das Bussystem herstellt.

6. Datenverarbeitungsanlage nach einem der Ansprüche 1 bis 5,
**dadurch gekennzeichnet, daß** die übergeordnete Steuereinheit (2) einen austauschbaren Datenspeicher (31) besitzt.

7. Datenverarbeitungsanlage nach einem der Ansprüche 1 bis 6,
**dadurch gekennzeichnet, daß** die übergeordnete Steuereinheit (2) eine Steuereinheit (27) für einen zweiten Netzwerkanschluß (33) besitzt.

8. Datenverarbeitungsanlage nach einem der Ansprüche 1 bis 7,
**dadurch gekennzeichnet, daß** die Speichereinheit (4) mehrere Massenspeicher (6) und eine Massenspeicher-Steuereinrichtung (5) besitzt.
